Europäisches Patentamt

European Patent Office

Office européen des brevets

(19)

(11) Numéro de publication: **0 031 177**
**B1**

(12) **FASCICULE DE BREVET EUROPEEN**

(45) Date de publication du fascicule du brevet:
01.08.84

(51) Int. Cl.³: **B 29 H 5/28,** B 29 F 3/08,
F 16 J 15/16, H 01 B 13/14

(21) Numéro de dépôt: 80201149.4

(22) Date de dépôt: 04.12.80

(54) Dispositif de confinement radial pour un produit allongé.

(30) Priorité: 21.12.79 CH 11437/79

(43) Date de publication de la demande:
01.07.81 Bulletin 81/26

(45) Mention de la délivrance du brevet:
01.08.84 Bulletin 84/31

(84) Etats contractants désignés:
CH DE FR GB LI

(56) Documents cités:
DE - A - 2 737 182
FR - A - 888 919
FR - A - 1 140 385
FR - A - 2 292 578
FR - A - 2 406 874
GB - A - 588 064
US - A - 2 307 575
US - A - 3 868 104

(73) Titulaire: Maillefer S.A., Route du Bois,
CH-1024 Ecublens Canton de Vaud (CH)

(72) Inventeur: Magnollay, Gilbert, 18, Chemin de Sous-Mont,
CH-1032 Romanel (Canton de Vaud) (CH)

(74) Mandataire: Rochat, Daniel Jean et al, Bovard SA
Ingénieurs-conseils ACP Optingenstrasse 16,
CH-3000 Bern 25 (CH)

ACTORUM AG

## Description

La présente invention a pour objet un dispositif de confinement radial d'un produit allongé à surface latérale cylindrique, mobile longitudinalement en continu, comportant un manchon souple que le produit allongé traverse et des moyens de compression agissant sur le manchon de manière qu'il s'adapte étroitement à ladite surface latérale cylindrique.

Le problème du confinement radial d'un produit allongé tel qu'un câble revêtu d'une couche isolante en élastomère ou un tube en élastomère se pose notamment dans la construction des lignes de vulcanisation de ces produits. Ces lignes comportent une enceinte tubulaire de grande longueur qui contient une atmosphère de gaz sous pression ou, dans leur partie inférieure, un liquide de refroidissement et le câble doit être conduit à travers un orifice de sortie sans que sa surface extérieure soit détériorée par le contact d'objets rigides mais en évitant les fuites de fluide sous pression.

Un des éléments qui compliquent la solution de ce problème est le fait que le produit allongé peut présenter de légères variations de section au cours de sa production. Ou bien sa forme varie légèrement, certains tronçons étant par exemple légèrement ovalisés, ou bien le diamètre peut être légèrement variable. Le dispositif de confinement doit s'adapter à ces variations.

Toutefois, des dispositifs de confinement du genre mentionné au début peuvent être utilisés dans d'autres cas, par exemple en guise de palier pour supporter un câble isolé ou un tube en élastomère ou comme orifice d'entrée ou de sortie dans un bac de refroidissement.

Les brevets CH 582 408, GB-A-2 014 255 et FR 2 406 874 décrivent des dispositifs dans lesquels plusieurs anneaux en élastomère espacés le long du produit allongé sont comprimés de façon à l'enserrer plus ou moins. Ces dispositifs ne conviennent toutefois pas si la pression dans l'enceinte tubulaire est relativement élevée et si la surface du produit allongé est dans un état tel, au moment où ce produit traverse le dispositif de confinement, qu'elle risque d'être détériorée par le contact des anneaux.

Pour des applications où la pression dans l'enceinte est élevée on connaissait un dispositif (GB 588 064) utilisant comme organe d'étanchéité un manchon en matériau déformable entourant le produit allongé et relié par ses extrémités à la paroi d'une chambre annulaire. Un fluide sous pression pouvait être introduit dans cette chambre. Pour éviter le contact matériel du manchon avec le produit allongé, la pression était réglée dans la chambre annulaire de façon que le fluide de l'enceinte s'écoule en permanence, à faible débit entre le manchon et le produit allongé. Dans le même but, c.à.d. réduire les fuites de fluide hors de l'enceinte tout en évitant un contact matériel avec le produit allongé, on connaissait également (DE-OS-2 737 182) un dispositif de confinement dans lequel le produit allongé traverse successivement une série d'anneaux tubulaires en caoutchouc, à section circulaire, raccordés à une première source de fluide qui est de l'air comprimé. Ces anneaux sont répartis par groupes qui délimitent entre eux des chambres intermédiaires et une seconde source de fluide sous pression envoie dans une chambre centrale un liquide lubrifiant qui est récolté dans une autre chambre située en aval. Avec ce dernier dispositif, les fuites du fluide contenu dans l'enceinte sont évitées, mais du fait que les anneaux sont de forme torique, les espaces annulaires qu'ils délimitent avec le produit allongé présentent chacun une section minimale située dans un plan perpendiculaire au produit allongé, de sorte que le liquide lubrifiant subit en s'écoulant entre les anneaux et le produit allongé des variations de pression susceptibles de créer des instabilités de fonctionnement et de marquer la surface du produit allongé, même s'il n'y a pas de contact matériel entre cette surface et les anneaux.

Le but de la présente invention est de remédier aux défauts des dispositifs de confinement connus en créant un dispositif simple et auto-réglant sans risquer de détériorer la surface du produit allongé.

Dans ce but, l'objet de la présente invention, du genre précédemment mentionné, est caractérisé en ce que lesdits moyens de compression comportent deux circuits de fluide sous pression dont le premier alimente une chambre annulaire qui entoure le manchon et le second un espace annulaire compris entre le manchon et le produit.

Ainsi, tout en utilisant comme organe de confinement un manchon souple, et non pas une série d'anneaux comme la plupart des dispositifs connus antérieurement, la présente invention atteint le but visé par le fait que l'espace annulaire compris entre le produit à confiner et le manchon est alimenté en fluide sous pression, alors qu'une seconde alimentation en fluide sous pression comprime le manchon radialement. Le manchon est ainsi soumis à des forces stables, dirigées radialement qui lui imposent une position d'équilibre de sorte que sa déformation est auto-réglée et qu'il suit les variations que la section du produit allongé peut présenter.

On va décrire ci-après, à titre d'exemple, une forme d'exécution du dispositif selon l'invention et une variante en se référant au dessin annexé, dont:

la fig. 1 est une vue en coupe axiale du dispositif, et

la fig. 2 une vue semblable de la variante.

Le dispositif représenté au dessin est construit pour fonctionner comme joint de sortie principal dans une enceinte tubulaire 1 servant à la vulcanisation et au refroidissement d'un câble électrique 18. Ce dernier reçoit sa couche d'isolation à l'entrée de la ligne dans une tête d'extrusion (non représentée). A son extrémité inférieure, la ligne de vulcanisation 1 comporte un tube 2 muni d'une bride 3. Le dispositif qui va être décrit est fixé à cette bride. Il comporte un organe de support annulaire 4 maintenu par exemple par des vis (non représentées) contre la bride 3. A l'intérieur de cet organe est logé un manchon souple en élastomère 5 fixé par exemple par vulcanisation entre une bague métallique avant 6 et une bague métallique arrière 7, l'ensemble étant engagé à l'intérieur du support 4 et retenu en place par la bride latérale 6a de la pièce 6 et par les vis 8 qui appliquent la plaque annulaire de blocage 9 axialement contre le support 4. La ligne décrite comporte en outre une chambre de sortie désignée de façon générale par 10 et dont la bride amont 11 s'engage sur le support annulaire 4 de façon à pouvoir être fixé à la bride 3. Cette chambre de sortie ne fait pas partie du dispositif décrit.

Le support annulaire 4 présente une gorge interne 12 qui délimite avec la surface extérieure du manchon 5 une chambre annulaire de faible épaisseur entourant tout le manchon. Cette chambre est fermée de façon étanche par des anneaux d'étanchéité 13 qui sont logés dans des gorges du support 4 et qui coopèrent avec la surface extérieure des bagues 6 et 7. Une forure radiale 14 ménagée dans le support 4, et reliée par un raccord 15 à un circuit d'alimentation en air sous pression 16, permet de faire agir dans cette chambre une pression d'air réglable, de sorte que le manchon se déforme radialement dans le sens centripète. Sa surface interne 17 qui se trouve normalement à une distance prédéterminée de la surface externe du câble isolé 18 traité dans l'enceinte 1, se contracte et sa distance au câble diminue.

En outre, le dispositif de confinement décrit comporte un circuit d'eau sous pression désigné par 19. La canalisation d'eau est connectée par un raccord 20 à une forure radiale 21 ménagée dans le support 4. Cette forure débouche dans une gorge 22 ménagée dans la bague 6 et capable d'alimenter des forures axiales 23 ménagées à mi-hauteur dans le manchon 5 et réparties autour de l'axe du dispositif. Au milieu de leur longueur ces forures axiales 23 communiquent avec le fond d'une gorge 24 qui est ménagée dans la face intérieure 17 du manchon 5, à peu près au milieu de sa longueur.

La pression de l'air dans le circuit 16 doit être supérieure à la pression régnant dans l'enceinte du vulcanisation 1. Le cricuit 16 est équipé des soupapes 25 et 26 et est raccordé par une tubulure 27 au tube 1. Il comporte encore une vanne de réglage 28 et un orifice d'échappement réglable 29. Son alimentation en fluide sous pression provient de la tuyauterie 31. Le fluide du circuit 16 pourrait aussi, en variante, être de l'eau. Quant au circuit 19, il est également fermé par une soupape à bille 30 qui laisse entrer l'eau quand la pression interne dans le circuit est inférieure à celle qui règne dans la conduite 32 d'alimentation. On ajustera celle-ci à une valeur suffisante de façon qu'il s'établisse un équilibre entre les forces exercées sur le manchon 5, d'une part, par le film liquide qui s'écoule dans l'espace annulaire 37 situé entre le câble 18 et la surface 17, et d'autre part, par l'air sous pression contenu dans la chambre 12. Le rapport des pressions sera égal au rapport entre les diamètres extérieur et intérieur du manchon 5. On conçoit que, comme les forures 23 sont constamment remplies d'eau, la déformation du manchon 5 sous l'effet de la pression régnant dans la chambre 12 est une déformation radiale dont l'amplitude est maximale au centre du manchon, c'est-à-dire de part et d'autre de la gorge 24. Si le débit de fuite augmente, par exemple du fait d'une réduction du diamètre de l'isolant, immédiatement la déformation du manchon s'amplifie sous l'effet de la pression régnant dans la chambre 12 et un nouvel équilibre des forces s'établit pour une déformation du manchon un peu plus grande que précédemment. On obtient ainsi un dispositif de confinement auto-réglé d'un fonctionnement sûr et d'une construction simple. Ce dispositif s'adapte automatiquement et instantanément aux variations de dimensions et de forme du câble.

Cet effet d'autocompensation détermine la différence des pressions régnant dans la chambre 12 et dans l'espace annulaire 37. Si le tronçon de câble qui passe dans le dispositif a un diamètre relativement grand, la pression dans l'espace 37, et par conséquent, dans la gorge 22 et le conduit 20, est relativement élevée. La différence entre les pressions dans la chambre 12 et dans l'espace 37 est relativement faible et la déformation du manchon 5 est faible. Si, en revanche, le tronçon du câble qui traverse le dispositif a un faible diamètre, la pression dans l'espace 37 est faible et la différence entre les pressions dans la chambre 12 et dans l'espace 37 est grande, ce qui provoque une grande déformation du manchon 5. La plage de variation décrite ci-dessus dépend de la pression dans la chambre 12, qui est déterminée, d'une part, par la pression dans l'enceinte 1, transmise par la conduite 27 à la soupape 25, et d'autre part, par la position de la vanne 28.

On conçoit maintenant, et c'est un aspect secondaire de la présente invention, que la valeur de la pression à un point quelconque du circuit 19, entre la soupape 30 et les conduits 23, est une mesure du débit de fuite à travers la gorge 24 et l'espace 37. Indépendamment de la pression dans la chambre 12, il se produit une chute de pression entre la partie d'entrée et la partie interne du circuit 19, du fait de la présence de la soupape à bille 30 et cette chute de pression dépend directement de la hauteur du jeu entre le câble et la surface interne 17 du manchon 5.

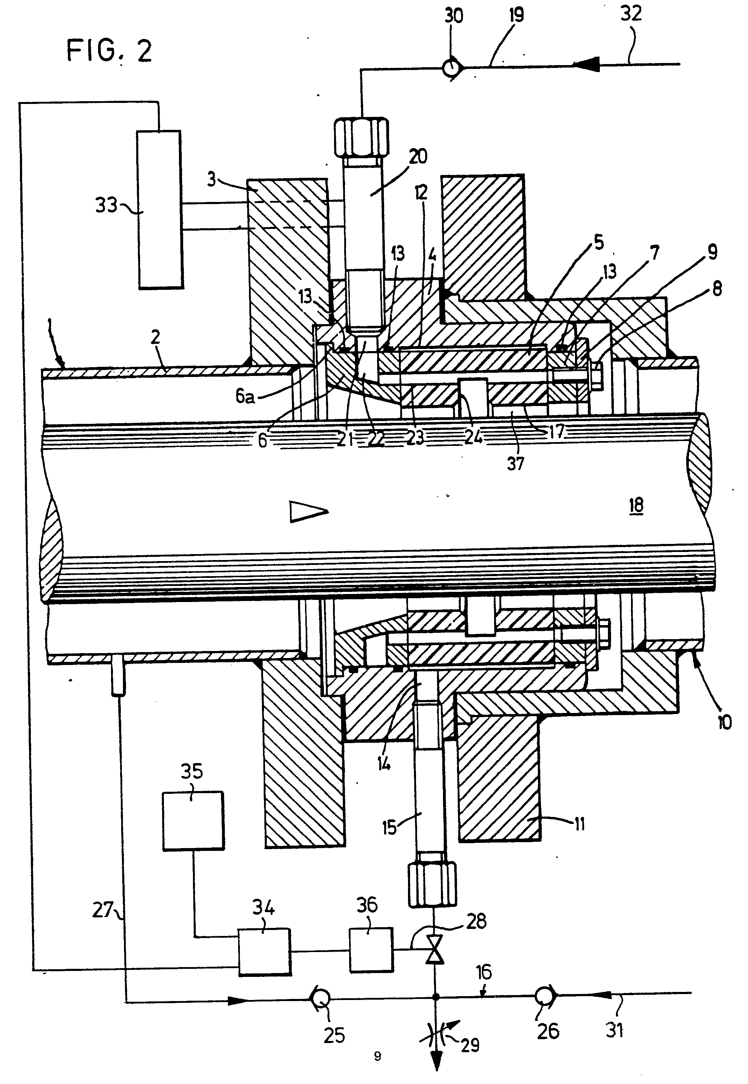

On prévoit donc, dans la variante d'exécution représentée à la fig. 2 de raccorder un point du circuit 19, par exemple le raccord 20 à un manomètre 33. Il peut s'agir d'un manomètre à lecture directe qui donne la valeur de la pression au surveillant de l'installation, ou d'un manomètre de réglage qui émet des signaux électriques ou hydrauliques correspondant à la pression mesurée. Dans le premier cas, le surveillant de l'installation agira sur la vanne 28 en fonction des indications lues sur le manomètre 33, de manière à la maintenir à une valeur fixe, de consigne. Dans le second cas, on pourra compléter le dispositif de commande par un comparateur 34 qui compare l'indication du manomètre 33 avec un émetteur 35 d'une valeur de consigne et par un organe de commande 36 agissant sur la vanne 28 de manière à maintenir le manomètre 33 à une valeur proche de la valeur de consigne, en réglant ainsi le débit de fuite à une valeur prédéterminée.

D'autres formes d'exécution peuvent également être imaginées. Ainsi, les deux circuits d'air et d'eau, au lieu d'être entièrement indépendants, pourraient être connectés l'un à l'autre. Dans les deux circuits, on pourrait utiliser le même fluide, l'un des circuits étant dérivé du premier à travers une soupape de réduction de pression.

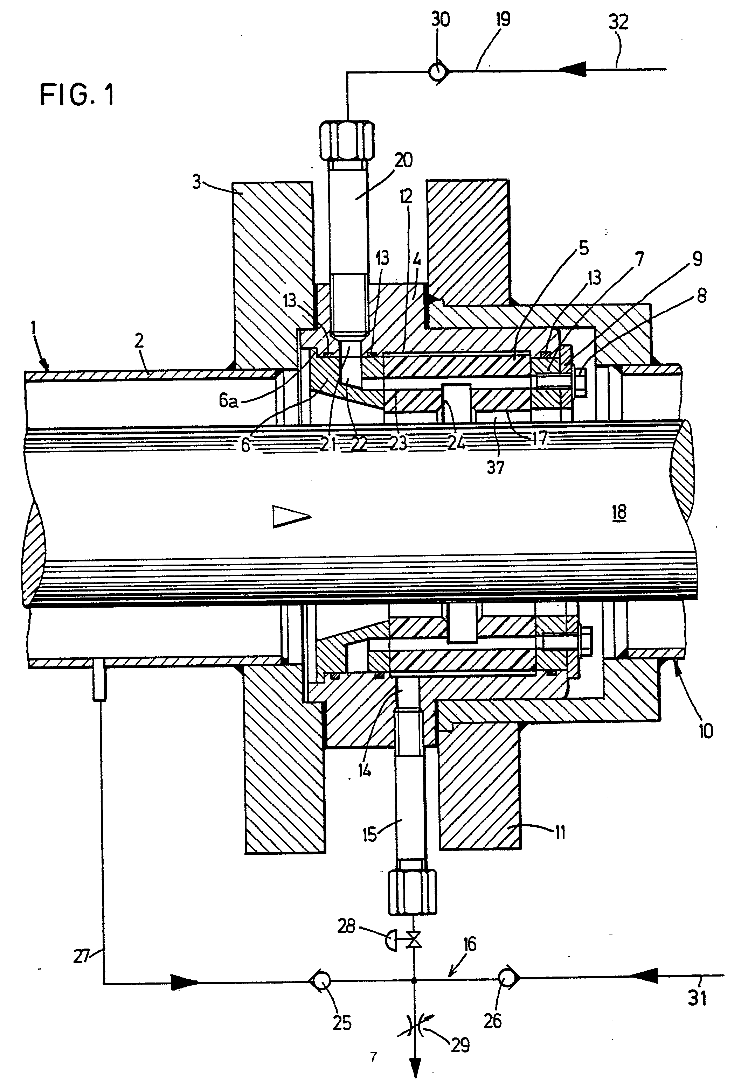

En effet, il résulte des explications données au sujet de la forme d'exécution des figs 1 et 2 que du fait des soupapes à bille 30, 26 et 25 les pressions régant le long des deux circuits, à l'aval des soupapes, sont déterminées par les caractéristiques des circuits, c'est-à-dire l'ajustage de la vanne 28 et de l'orifice 29, les caractéristiques de déformation du matériau du manchon 5, les dimensions de ce manchon et l'épaisseur de l'espace 37. Comme on l'a dit plus haut, le manchon se déforme et prend une position d'équilibre qui est déterminée par l'égalité des forces radiales antagonistes qu'il subit. De ce fait, les pressions dans les circuits 19 et 16 à l'amont des soupapes 30 et 26 peuvent être égales, et comme on peut utiliser le même fluide dans les deux circuits, ceux-ci peuvent être reliés à une source commune.

## Revendications

1. Dispositif de confinement radial d'un produit allongé (18) à surface latérale cylindrique, mobile longitudinalement en continu, comportant un manchon souple (5) que le produit allongé (18) traverse et des moyens de compression agissant sur le manchon (5) de manière qu'il s'adapte étroitement à ladite surface latérale cylindrique, caractérisé en ce que lesdits moyens de compression comportent deux circuits de fluide sous pression dont le premier (16) alimente une chambre annulaire (12) qui entoure le manchon (5) et le second (19) un espace annulaire (37) compris entre le manchon (5) et le produit (18).

2. Dispositif selon la revendication 1, caractérisé en ce que les deux circuits (16, 19) sont indépendants l'un de l'autre.

3. Dispositif selon la revendication 2, caractérisé en ce que le circuit (16) alimentant ladite chambre annulaire (12) est un circuit de gaz sous pression, tandis que l'autre circuit (19) est un circuit de liquide sous pression.

4. Dispositif selon la revendication 3, caractérisé en ce que le circuit (19) d'alimentation de l'espace annulaire (37) limité extérieurement par la face intérieure (17) du manchon (5) comporte des forures (23) orientées axialement dans le manchon et débouchant dans sa face interne (17), ces forures étant raccordées à un conduit d'alimentation (20) traversant un support tubulaire (4).

5. Dispositif selon la revendication 1, caractérisé en ce que les deux circuits (16, 19) sont connectés l'un à l'autre et utilisent le même fluide.

6. Dispositif selon la revendication 1, caractérisé en ce qu'il constitue le joint de sortie principal d'une enceinte de vulcanisation (1) d'un produit allongé (18) en élastomère.

7. Dispositif selon la revendication 1, caractérisé en ce que le premier circuit (16) comporte une vanne (28) permettant de régler la pression dans ladite chambre annulaire (12).

8. Dispositif selon la revendication 7, caractérisé en ce que le second circuit (19) comporte une soupape à bille (30) logée entre une partie d'entrée (32) du second circuit et une partie interne (20, 21, 23, 24) de ce même circuit qui est en communication avec ledit espace annulaire (37).

9. Dispositif selon la revendication 8, caractérisé en ce qu'il comprend un organe de mesure (33) de la pression en un point de ladite partie interne du second circuit.

10. Dispositif selon la revendication 9, caractérisé en ce qu'il comporte un circuit de réglage (34, 35, 36) qui commande ladite vanne (28) du premier circuit en fonction de la valeur de réglage donnée par ledit organe de mesure (33) de façon que cette dernière valeur s'aligne sur une valeur de consigne prédéterminée.

## Claims

1. Device for radial confinement of an elongated, continuously longitudinally movable product (18) having a cylindrical lateral surface, comprising a flexible sleeve (5) through which the elongated product (18) passes, and compression means acting upon the sleeve (5) in such a way that it closely adapts itself to said cylindrical lateral surface, characterized in that the said compression means comprise two pressurized-fluid circuits, the first of which (16) feeds an annular chambre (12) which surrounds the sleeve (5), and the second (19) annular space (37) comprised between the sleeve (5) and the product (18).

2. Device according to claim 1, characterized in that the two circuits (16, 19) are independent of one another.

3. Device according to claim 2, characterized in that the circuit (16) feeding said annular chamber (12) is a pressurized-gas circuit, while the other circuit (19) is a pressurized-liquid circuit.

4. Device according to claim 3, characterized in that the circuit (19) for feeding of the annular space (37) outwardly bounded by the inside surface (17) of the sleeve (5) comprises bores (23) oriented axially in the sleeve and opening out in its inside surface (17), these bores being connected to a feed pipe (20) passing through a tubular support (4).

5. Device according to claim 1, characterized in that the two circuits (16, 19) are connected to one another and use the same fluid.

6. Device according to claim 1, characterized in that it constitutes the main exit gasket of an enclosure (1) for vulcanizing an elongated product (18) of elastomer.

7. Device according to claim 1, characterized in that the first circuit (16) comprises a valve (28) allowing regulation of the pressure in said annular chamber (12).

8. Device according to claim 7, characterized in that the second circuit (19) comprises a ball valve (30) seated between an entry portion (32) of the second circuit and an interior portion (20, 21, 23, 24) of this same circuit which communicates with said annular space (37).

9. Device according to claim 8, characterized in that it includes a component (33) for measuring the pressure at a point of said interior portion of the second circuit.

10. Device according to claim 9, characterized in that it comprises a control circuit (34, 35, 36) which controls said valve (28) of the first circuit as a function of the control value given by said measuring component (33) so that this latter value is brought in line with a predetermined reference value.

**Patentansprüche**

1. Radialeinsperrvorrichtung für langgestrecktes Material mit zylindrischer Mantelfläche, das kontinuierlich in Längsrichtung beweglich ist, mit einer vom langgestreckten Material (18) durchsetzten, nachgiebigen Muffe (5) und mit Kompressionsmitteln, die derart auf die Muffe (5) einwirken, dass diese sich eng an die besagte zylindrische Mantelfläche anschmiegt, dadurch gekennzeichnet, dass die besagten Kompressionsmittel zwei Kreisläufe von Druckfluid aufweisen, von denen der erste (16) eine die Muffe (5) umgebende Ringkammer (12) und der zweite (19) einen Ringraum (37) speist, der zwischen der Muffe (5) und dem Material (18) gelegen ist.

2. Vorrichtung nach Anspruch 1, dadurch gekennzeichnet, dass die beiden Kreisläufe (16, 19) voneinander unabhängig sind.

3. Vorrichtung nach Anspruch 2, dadurch gekennzeichnet, dass der die besagte Ringkammer (12) speisende Kreislauf ein Druckgaskreislauf ist, wogegen der andere Kreislauf (19) ein Druckflüssigkeitskreislauf ist.

4. Vorrichtung nach Anspruch 3, dadurch gekennzeichnet, dass der Kreislauf (19), welcher den Ringlauf (37) speist, der innen durch die Innenfläche der Muffe (5) begrenzt ist, Bohrungen (23) aufweist, die in der Muffe axial orientiert sind und in deren Innenfläche (17) einmünden, wobei diese Bohrungen an eine Speiseleitung (20) angeschlossen sind, die einen rohrförmigen Support (4) durchsetzen.

5. Vorrichtung nach Anspruch 1, dadurch gekennzeichnet, dass die beiden Kreisläufe (16, 19) aneinander angeschlossen sind und das gleiche Fluid benützen.

6. Vorrichtung nach Anspruch 1, dadurch gekennzeichnet, dass es die Hauptauslassdichtung eines Vulkanisierraumes (1) eines langgestreckten Elastomerproduktes (18) bildet.

7. Vorrichtung nach Anspruch 1, dadurch gekennzeichnet, dass der erste Kreislauf (16) ein Absperrorgan (28) enthält, welches es gestattet, den Druck in der besagten Ringkammer (12) zu regeln.

8. Vorrichtung nach Anspruch 7, dadurch gekennzeichnet, dass der besagte zweite Kreislauf (19) ein Kugelventil (30) enthält, das zwischen einem Eintrittsteil (32) des zweiten Kreislaufes und einem inneren Teil (20, 21, 23, 24) dieses Kreislaufes gelegen ist, welcher mit dem besagten Ringraum (37) in Verbindung steht.

9. Vorrichtung nach Anspruch 8, dadurch gekennzeichnet, dass es ein Organ (33) zum Messen des Druckes an einer Stelle des besagten inneren Teiles des zweiten Kreislaufes aufweist.

10. Vorrichtung nach Anspruch 9, dadurch gekennzeichnet, dass es einen Regelkreislauf (34, 35, 36) aufweist, der das besagte Absperrorgan (28) des ersten Kreislaufes in Abhängigkeit vom durch das besagte Messorgan (33) gegebenen Regelwert derart steuert, dass dieser letztere Wert sich auf einen vorbestimmten Sollwert ausrichtet.

FIG. 1

0 031 177

FIG. 2

0 031 177